# EUROPÄISCHE PATENTSCHRIFT

(11) **EP 1 529 717 B1**
(45) Veröffentlichungstag und Bekanntmachung des Hinweises auf die Patenterteilung: **26.09.2007**
(21) Anmeldenummer: 04024468.3
(22) Anmeldetag: 14.10.2004
(51) Int. Cl.: B62D 7/14

(54) **Blockiervorrichtung für eine hydraulische Fahrzeug-Hinterachslenkung**
Blocking device for an hydraulic rear axle steering of a vehicle
Dispositif de blocage pour direction hydraulique d'un essieu arrière de véhicule

(30) Priorität: 04.11.2003 DE 10351482
(43) Veröffentlichungstag der Anmeldung: 11.05.2005
(73) Patentinhaber: ZF Lenksysteme GmbH, 73527 Schwäbisch Gmünd (DE)
(72) Erfinder: Stocker, Jürgen, 73479 Ellwangen (DE); Braun, Andreas, 73529 Schwäbisch Gmünd (DE); Kogel, Walter, 73453 Abtsgmünd / Neubronn (DE)

(56) Entgegenhaltungen:
- DE-A1- 3 615 740
- DE-A1- 3 902 810
- DE-A1- 4 204 123
- US-A- 4 953 445
- US-A- 5 086 863

## Beschreibung

Die Erfindung betrifft eine Blockiervorrichtung für eine hydraulische Fahrzeug-Hinterachslenkung nach dem Oberbegriff des Anspruchs 1 sowie eine damit ausgestattete Hinterachslenkung nach dem Oberbegriff des nebengeordneten Anspruchs.

Größere Fahrzeug, insbesondere Nutzkraftwagen, verfügen neben einer Vorderachslenkung noch über eine zusätzlich angeordnete Hinterachslenkung, die üblicherweise als hydraulische, insbesondere als hydrostatische. Lenkung ausgebildet ist und die in Abhängigkeit von der Vorderachslenkung gesteuert oder auch geregelt wird. Dadurch wird u.a. eine höhere Manövrierfähigkeit des Fahrzeuges erzielt. Bei hohen Fahrgeschwindigkeiten jedoch ist es sinnvoll und aus Sicherheitgründen sogar erforderlich, dass die Hinterachslenkung möglichst nicht wirkt, sondern die Neutralstellung, d.h. die Stellung für Geradeausfahrt, einnimmt. Üblicherweise wird dazu die Hinterachslenkung abgeschaltet oder blockiert durch mechanische, pneumatische, hydraulische oder sonstige Blockiervorrichtungen.

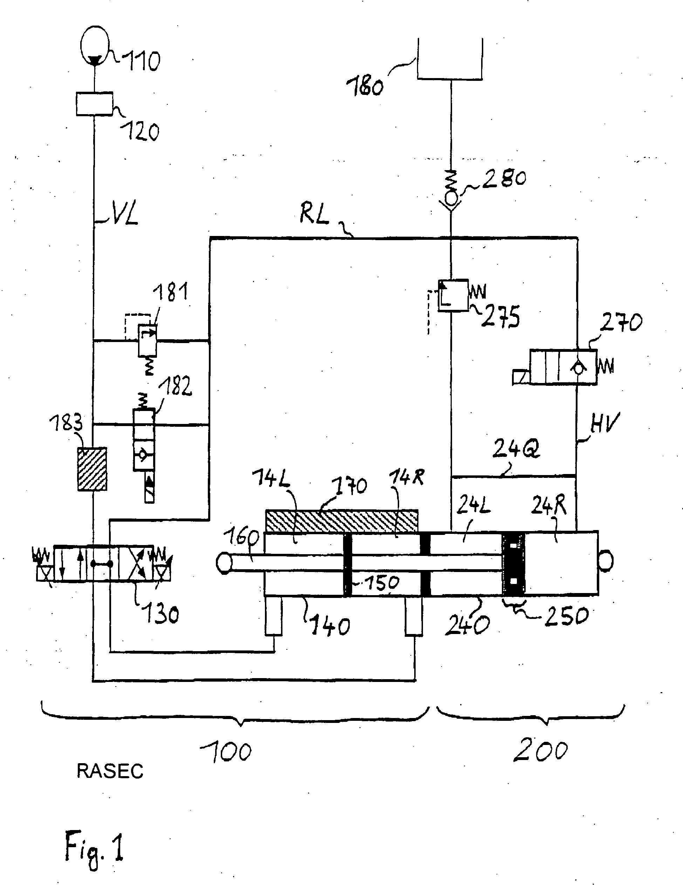

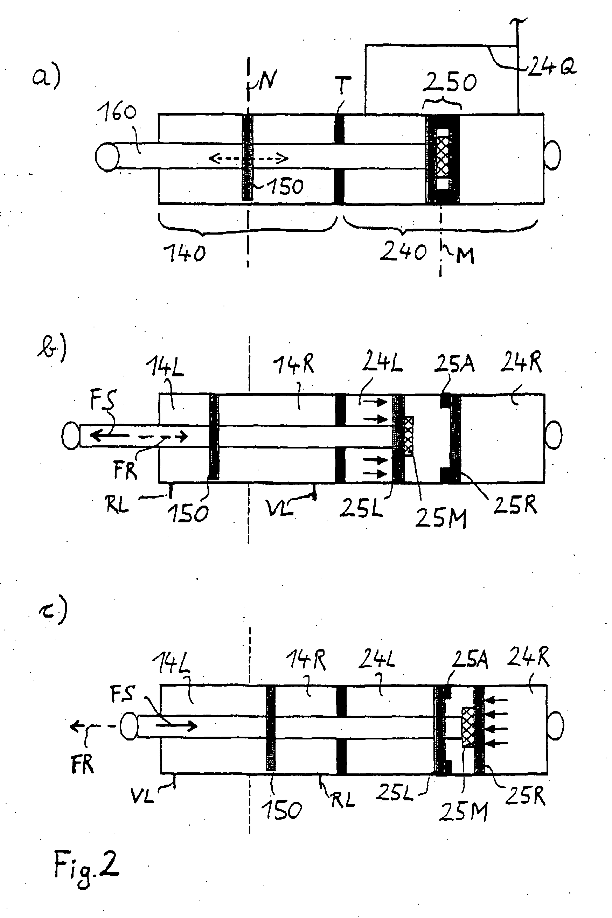

Aus der DE 36 15 740 C2 und der US 5086863 ist eine Mehrachslenkanlage für ein Fahrzeug bekannt, die eine Vorderachslenkung und eine Hinterachslenkung umfasst. Wie dort etwa aus der Figur 1 hervorgeht und in der Spalte 2, Zeile 59 ff. beschrieben ist, besteht die Hinterachslenkung aus einem hydraulischen Arbeitskreis, der ein Steuerventil (15) und einen daran angeschlossenen Arbeitszylinder (12) enthält, in dem ein Arbeitskolben (13) verschiebbar aus einer Neutralposition heraus angeordnet ist und eine erste Lenkachse 1 bewegt. Zusätzlich zu dem Arbeitszylinder (12) ist ein zweiter Arbeitszylinder (16) in Reihe geschaltet, dessen Arbeitskolben (42) eine zweite Lenkachse bewegt. Außerdem ist dort eine Blockiervorrichtung mit einem Blockierzylinder (3) vorgesehen, der über eine Druckspeicher (18) mit Druckluft versorgt wird und der eine hydropneumatische Blockierung der Lenkmechanik bewirkt, bei der zumindest die Verschiebung des zweiten Arbeitskolbens (42) zumindest zeitweise verhindert wird. Wie sich aus der dortigen Figur 2 ergibt, ist zusätzlich zu dieser hydropneumatischen Blockierung noch eine mechanische Blockierung vorgesehen, bei der ein Haltering (20) in einer Aussparung (24) ruht, so dass die Lenkmechanik mechanisch arretiert. Dies geschieht vor allem bei hohen Fahrzeuggeschwindigkeiten (s. dort Spalte 1, Zeile 16 ff.), um sicherzustellen, dass die Hinterachse auf Neutralposition, d.h. auf Geradeausfahrt, festgehalten wird. Um in die Neutralposition zu gelangen, wird dort vorgeschlagen, eine elektronische Schaltung (s. Figur 3 und Spalte 4, Zeile 16 ff.) vorzusehen, mit deren Hilfe der Fahrer über einen Wahlschalter (31) die Blockierung aktivieren kann. Sobald die Neutralstellung (Geradeausfahrtstellung) bei hoher Fahrgeschwindigkeit überschritten wird, greift die Blockierung automatisch ein.

Diese bekannte Blockiervorrichtung bewirkt zwar eine automatische Arretierung der Hinterachse auf Geradeausfahrt. Jedoch wird dort noch der Eingriff des Fahrers benötigt, um die Blockiervorrichtung zu aktivieren. Außerdem erfordert das dort beschrieben Zusammenspiel von hydropneumatischer Blockierung und mechanischer Blockierung eine recht umfangreiche und gut aufeinander abgestimmte Konstruktion.

Aufgabe der Erfindung ist es, eine möglichst einfach zu realisierende Blockiervorrichtung vorzuschlagen, bei der die zu blockierende Hinterachse sich selbst auf Neutralposition (Geradeausfahrt) zentriert.

Gelöst wird die Aufgabe durch eine Blockiervorrichtung mit den Merkmalen des Anspruchs 1 sowie durch eine Fahrzeug-Hinterachslenkung mit den Merkmalen des nebengeordneten Anspruchs.

Demnach wird vorgeschlagen, dass die Blockiereinrichtung ein mit dem Rücklauf des hydraulischen Arbeitskreises verbundenes Blockierventil und einen daran angeschlossenen Blockierzylinder enthält, der eine Blockierkolbenanordnung aufnimmt, die über eine mechanische Verbindung zumindest wirkverbunden mit dem Arbeitskolben ist, und dass das Blockierventil schaltbar ist und eine hydraulische Verbindung zwischen dem Rücklauf des Arbeitskreises und dem Blockierzylinder in eine Strömungsrichtung so sperrt, dass aus dem Blockierzylinder kein Hydraulikmittel in den Rücklauf fließen kann, wodurch die Blockierkolbenanordnung auf die Verschiebung des Arbeitskolbens beschränkend einwirkt, so dass der Arbeitskolben nur noch in Richtung zu der Neutralposition hin verschiebbar ist.

Demnach wird eine aktivierbare Blockiereinrichtung vorgeschlagen, die bei Bedarf den Arbeitskolben und somit auch die Hinterachslenkung in Richtung Geradeausfahrt zentriert und anschließend in dieser Neutralposition arretiert. Beide Funktionen werden durch einen hydraulischen Blockierzylinder erreicht. Der Blockierzylinder könnte demnach auch als Zentier- und Blockierzylinder bezeichnet werden.

Bevorzugte Ausführungen der Erfindung ergeben sich aus den Unteransprüchen.

Demzufolge ist es vorteilhaft, wenn der Arbeitszylinder und der Blockierzylinder in einem Gehäuse angeordnet sind und dass die mechanische Verbindung eine Kolbenstange ist, die auf die Lenkmechanik wirkt und die den Arbeitskolben starr mit der Blockierkolbenanordnung verbindet. Das bedeutet eine einfache und kostensparende Konstruktion. Als teurere Alternative könnte jedoch der Blockierzylinder separat, räumlich abgesetzt vom Arbeitszylinder angeordnet werden.

Auch ist es vorteilhaft, wenn eine Steuerung, insbesondere eine elektrische Steuerung, vorgesehen ist, die das Blockierventil in Abhängigkeit der Fahrzeuggeschwindigkeit so schaltet, dass die hydraulische Verbindung zwischen dem Rücklauf des Arbeitskreises und dem Blockierzylinder in beide Strömungsrichtungen geöffnet ist, wenn die Fahrgeschwindigkeit einen vorgebbaren Wert unterschreitet. Die Zentrierung der Hinterachslenkung und die anschließende Sperre (Arretierung) erfolgt erst ab einer vorgebbaren Geschwindigkeit von z.B. 40 km/h. Unterhalb dieser Geschwindigkeitsgrenze ist die Blockiervorrichtung deaktiviert und es erfolgt kein beschränkender Eingriff auf die Hinterachslenkung.

Vorteilhafterweise ist die Blockierkolbenanordnung so aufgebaut, das sie einen mittels der mechanischen Verbindung, insbesondere mittels der Kolbenstange, bewegbaren Stoßkolben und zwei fliegende Scheiben enthält, die dichtend an der Innenwand des Blockierzylinders auf jeweils einer der beiden Seiten des Stoßkolbens anliegen, dass der Blockierzylinder an einer der Neutralposition entsprechenden Mittenposition mindestens einen Anschlag aufweist, an den die jeweilige fliegende Scheibe anschlägt, falls der Stoßkolben diese Scheibe nicht von der Mittenposition wegstößt. In diesem Zusammenhang ist es besonders von Vorteil, wenn der Rücklauf über ein Rückschlagventil mit einem Reservoir verbunden ist, und dass Rückschlagventil verhindert, dass der Druck im Rücklauf unter ein Mindestdruck fällt, und dass der Mindestdruck auf die im Blockierzylinder angeordneten fliegenden Scheiben wirkt und ausreicht, um jede der fliegenden Scheiben zur Mittenposition hin zu bewegen, falls der Stoßkolben die jeweilige Scheibe nicht von der Mittenposition wegstößt. Somit können viele Standardbauteile eingesetzt werden, was zu einer kostengünstigen und funktionssicheren Konstruktion führt.

Das gilt im besonderen Maße, wenn zudem auch noch das Blockierventil als ein über einen Schaltstrom schaltbares Zwei-Wege-Ventil ausgeführt ist, welches im bestromten Zustand in beide Strömungsrichtungen öffnet und im stromlosen Zustand die Strömungsrichtung vom Blockierzylinder zum Rücklauf sperrt.

Ein weiterer Vorteil ergibt sich, wenn eine Hydraulikpumpe vorgesehen ist, die für den Arbeitskreis einen Arbeitsdruck erzeugt, dass ein erstes Sicherheitsventil vorgesehen ist, das eine Verbindung zwischen dem Vorlauf und dem Rücklauf des Arbeitskreises herstellt, sobald im Vorlauf der Arbeitsdruck einen vorgebbaren ersten Druckwert übersteigt, und wenn ein zweites Sicherheitsventil vorgesehen ist, das eine Verbindung zwischen dem Blockierzylinder und dem Rücklauf herstellt, sobald im Blockierkreis der Blockierdruck einen vorgebbaren zweiten Druckwert übersteigt.

Die Erfindung wird nun näher beschrieben anhand eines Ausführungsbeispiels und anhand der beiliegenden Zeichnungen, die folgende schematische Darstellungen wieder geben:
- Fig. 1: zeigt den Aufbau der Hinterachslenkung umfassend einen Arbeitskreis und eine erfindungsgemäße Blockiereinrichtung; und
- Fig. 2: zeigt in drei Teilansichten a), b) und c) den Aufbau des Blockierzylinders in verschiedenen Auslenksituationen.

In der Fig. 1 ist zunächst der Aufbau einer nach der Erfindung ausgeführten Fahrzeug-Hinterachslenkung RASEC zu sehen. Die Hinterachslenkung besteht im wesentlichen aus einem hydraulischen Arbeitskreis 100 und aus einer Blockiervorrichtung 200. Zunächst erfolgt die Beschreibung der Funktionsweise des hydraulischen Arbeitskreises 100:

Der Arbeitskreis 100 umfasst einem Vorlauf VL und einem Rücklauf RL sowie einen darin eingegliederten Arbeitszylinder 140 Dieser wird über ein Steuerventil 130 angesteuert, damit ein im Arbeitszylinder befindlicher Arbeitskolben 150 ausgelenkt wird und eine Kolbenstange 160 bewegt, die wiederum die Auslenkung eines nicht dargestellten Lenkmechanismus bewirkt. Der im Arbeitskreis 100 sich einstellende hydraulische Arbeitsdruck wird von einer Pumpe 110 geschaffen, die über ein Filter 120 das Hydraulikmittel in den Vorlauf VL einspeist. Das Steuerventil 130 ist als ein Proportionalventil ausgeführt, das die Verbindung von Vor- und Rücklauf mit dem Arbeitszylinder herstellt. In seiner Nullstellung bewirkt das Steuerventil einen Kurzschluß zwischen dem Vorlauf VL und dem Rücklauf RL, so dass der Arbeitszylinder 140 vom Arbeitskreis abgekoppelt ist, und somit keine Auslenkung des Arbeitskolbens 150 erfolgt.

In einer ersten Stellung bewirkt das Steuerventil 130 eine direkte Verbindung von Vorlauf VL mit der rechten Arbeitskammer 14R des Arbeitszylinders und eine direkte Verbindung von Rücklauf RL mit der linken Arbeitskammer 14L. Somit wird in der rechten Arbeitskammer 14R ein höherer Druck erzeugt als in der linken Arbeitskammer 14L, wodurch der Arbeitskolben 150 sich nach links verschiebt.

In der entgegen gesetzten zweiten Stellung des Steuerventils 130 werden die linke Arbeitskammer 14L mit dem Vorlauf VL und die rechte Arbeitskammer 14R mit dem Rücklauf RL verbunden. Das wiederum bewirkt einen höheren Druck in der linken Arbeitskammer 14L, so dass sich der Arbeitskolben 150 nach rechts bewegt.

Durch Umschaltung des Steuerventils 130 kann somit jede Arbeitskammer mit dem Vorlauf VL oder dem Rücklauf RL des Arbeitskreises 100 verbunden werden und somit eine Auslenkung der Kolbenstange 160 nach links oder rechts bewirkt werden. Nach diesem Grundprinzip arbeiten auch herkömmliche die hydraulische Hinterachslenkungen.

Erfindungsgemäß ist nun zusätzlich noch eine Blockiervorrichtung 200 vorgesehen, die die Bewegung des Arbeitskolbens 160 in einer speziellen Art und Weise beschränkt und dadurch die Hinterachse auf Geradeausfahrt zentriert und danach arretiert. Der Aufbau und die spezielle Funktionsweise der Blockiereinrichtung wird nun näher beschrieben:

Die Blockiereinrichtung 200 enthält einen hydraulischen Blockierzylinder 240, der über ein Blockierventil 270 mit dem Rücklauf RL des Arbeitskreises 100 verbunden werden kann. In dem Blockierzylinder 240 befindet sich eine Blockierkolbenanordnung 250, die zumindest wirkverbunden ist mit der zuvor beschriebenen Kolbenstange 160. In diesem Beispiel ist der Blockierzylinder 240 direkt angeordnet an den Arbeitszylinder 140 und die Kolbenstange 160 wird aus dem Arbeitszylinder heraus direkt bis in den Innenraum des Blockierzylinders 240 hinein geführt, wo sie fest verbunden ist mit der noch näher zu beschreibenden Blockierkolbenanordnung 250. Mit diesen Maßnahmen wird sichergestellt, dass die Blockierkolbenanordnung 250 direkt der Bewegung des Arbeitskolbens 150 folgt und ggfs. beschränken und sperren kann.

Die Kammern 24L und 24R des Blockierzylinders 240 werden über das Blockierventil 270 vom Rücklauf RL getrennt, so dass die Blockierkolbenanordnung 250 über die Kolbenstange 160 beschränkend auf die Verschiebung des Arbeitskolbens 150 einwirkt, so dass der Arbeitskreis 100 den Arbeitskolben 150 nur noch in Richtung der Neutralposition (Geradeausfahrt) hin verschieben kann. Somit wird eine automatische Zentrierung und anschließende Blockierung der Hinterachslenkung erreicht.

In einer Zusammenschau der Fig. 1 und 2 wird nachfolgend die Arbeitsweise der erfindungsgemäßen Anordnung noch näher im Detail beschrieben:

Die Fig.2 zeigt in drei Teilansichten a), b) und c) den genaueren Aufbau des Arbeitszylinders 140 und des daran anschließenden Blockierzylinders 240 mit der darin angeordneten Blockierkolbenanordnung 250.

Bei Geradeausfahrt (s. Fig.2a) befindet sich der Arbeitskolben 150 in der Neutralposition N. Die direkt mit der Kolbenstange 160 verbundene Blockierkolbenanordnung 250 befindet sich in einer entsprechenden Mittenposition M. Sofern die Blockiereinrichtung 200 noch nicht aktiviert ist, d.h. sofem das Blockierventil 270 beidseitig geöffnet ist (s. Fig. 1), können sich die Blockierkolbenanordnung 250 und der damit über die Kolbenstange 160 verbundene Arbeitskolben 150 frei nach links oder rechts bewegen, je nachdem wie die Arbeitskammern 14L und 14R des Arbeitszylinders 140 über das Steuerventil 130 angesteuert werden.

Wird jedoch das Blockierventil 270 aktiviert und die Verbindung HV zum Rücklauf RL gesperrt, ist auch die Blockierkolbenanordnung 250 in der Mittenposition M fixiert. Denn bei gesperrtem Blockierventil 270 kann weder aus der linken Kammer 24L des Blockierzylinders 240 noch aus der rechten Kammer 24R Hydraulikmittel in den Rücklauf RL zurück fließen. Somit verharrt die Blockierkolbenanordnung 250 in der Mittenposition M. Damit kann dann auch der Arbeitskolben 150 sich nicht aus der Neutralposition N heraus verschieben. Auf diese Weise wird die Hinterachslenkung ist auf Geradeausfahrt hydraulisch arretiert.

Hinzu kommt, dass bei ausgelenkter Hinterachse zunächst eine Zentrierung erfolgt, welche sich durch die besondere Konstruktion der im folgenden näher beschriebenen Blockiervorrichtung 250 automatisch einstellt:

Wie anhand der Figuren 2b) und 2c) zu sehen, enthält die Blockierkolbenanordnung 250 einen Stoßkolben 25M und zwei fliegende Scheiben 25L und 25R. Die Mittenposition M weist außerdem einen Anschlag 25A auf, an dem die jeweilige fliegende Scheibe 25L oder 25R anschlägt, falls der Stoßkolben 25M diese Scheibe, z.B. 25L, nicht von der Mittenposition M weg stößt.

Mit anderen Worten: Die beiden fliegenden Scheiben 25L und 25R liegen in der jeweiligen Kammer 24L bzw. 24R dichtend an der Innenwandung des Blockierzylinders 240 an und können von dem Stoßkolben 25M nur einseitig, nämlich von der Mittenposition M weg, gestoßen werden. Andersherum kann durch Druckerzeugung in der jeweiligen Kammer 24L oder 24R die betroffene fliegende Scheibe 25L bzw. 25R sich nur dann zur Mittenposition M hin bewegen, wenn sie der Stoßkolben nicht zurück hält.

Beispielsweise, wie anhand der Fig. 2b) dargestellt, befindet sich der Stoßkolben 25M zusammen mit der linken Scheibe 25L in der linken Kammer 24L. Würde nun dort ein hoher Druck aufgebaut, so würde die linke fliegende Scheibe 25L versuchen, sich zur Mittenposition M hin zu bewegen und den Stoßkolben 25M nach rechts zu verschieben. In dieser Situation ist die rechte fliegende Scheibe 25R, welche sich in der rechten Kammer 24R befindet, unbeteiligt und hat keinen Einfluß auf den Stoßkolben 25M.

Befindet sich der Stoßkolben 25M hingegen in der rechten Kammer 24R, so kann lediglich die rechte fliegende Scheibe 25R auf den Stoßkolben 25M einwirken. Würde dann die rechte Kammer 24R mit Druck beaufschlagt, so würde die fliegende Scheibe 25R den Stoßkolben 25M nach links zur Mittenposition M hin bewegen wollen.

Dieser spezielle Mechanismus dient also nicht nur für die Blockierung, sondern auch auch für eine automatische Zentrierung des Arbeitskolbens 150:

In der Figur 2b) ist nach Art einer Momtentaufnahme schematisch dargestellt, wie der Arbeitskolben 150 aus einer links von der Neutralposition N befindlichen Position zurück geführt wird in die Neutralposition (Geradeausfahrt). Der Blockierzylinder 240 sei nun von dem Rücklauf RL abgesperrt, d.h. das Blockierventil (siehe 270 in Fig. 1) sei gesperrt. In diesem Falle können sich die fliegenden Scheiben 25L und 25R nicht mehr von der Mittenposition M weg bewegen, sondern lediglich noch zur Mittenposition M hin bewegen. Das wiederum bedeutet für den Arbeitskolben 150, dass er nicht weiter nach links über die jetzige Position hinaus verschoben werden kann, etwa durch in der Kurve auftretende Seitenführungskräfte SF. Der Arbeitskolben 150 kann lediglich noch zur Neutralposition N hin bewegt werden, etwa durch die bei Geradeausfahrt auftretenden Rückstellkräfte RF. Das wiederum bedeutet, dass in Kurvenlage die Hinterachslenkung in der momentanen Position gehalten und stabilisiert wird; bei Geradeausfahrt aber wird sie automatisch auf Neutralposition N zentriert.

Mit anderen Worten: Das Blockierventil 270 sperrt in diesem Zustand den Rücklauf RL und somit ein Ausschieben des Blockierzylinders 240. Den für ein Ausschieben, also für eine Bewegung des Zylinders von der Mitte weg, müsste Hydrauliköl ausgeschoben werden, was jedoch das Blockierventil 270 in dem gesperrten Zustand nicht erlaubt. Eine Bewegung zur Mitte hin ist jedoch möglich, wobei der Rücklaufdruck und die Nachsaugfunktion des Blockierventils dafür sorgen, dass die Scheibe am Stoßkolben anliegt, dass Hydrauliköl nachgeschoben wird und dass ein erneutes Auslenken verhindert wird.

Diese Wirkungsweise ergibt sich aus der speziellen Konstruktion des hydraulischen Blockiereinrichtung. Bei Kurvenfahrt wird eine von den Radreifen über den Lenkmechanismus und die Kolbenstange 160 nach links wirkende Seitenführungskraft FS durch einen auf die linke fliegende Scheibe 25L in der Kammer 24L herrschenden hydraulischen Gegendruck abgefangen. Somit ist eine weitere Auslenkung nach links nicht mehr möglich. Hingegen wenn bei Geradeausfahrt die Seitenführungskraft FS verschwindet und sich die Rückstellkraft FR einstellt, kann der Arbeitskolben 150 sich frei in Richtung Mitte (Neutralposition N) bewegen. Denn in diesem Falle wird der Stoßkolben 25M nicht mehr durch die linke Scheibe 25L gehindert und kann sich frei in Richtung Mittenposition M verschieben, bis er an der rechten fliegenden Scheibe 25R anschlägt. Darüber hinaus aber kann sich dann der Stoßkolben 25M nicht weiter nach rechts bewegen.

Das bedeutet, dass der angestaute Rücklaufdruck und die Nachsaugeigenschaft des Blockierventils 270, die sich bei stromlosen Ventil einstellt, bewirken, dass die Scheiben eng an dem Stoßkolben anliegen. Dadurch wird auch das Ausschieben des Zylinders blockiert. Diese Wirkung entspricht also einer Sicherheitsfunktion die eintritt, wenn das Blockierventil stromlos geschaltet ist, was insbesondere beim Ausfall der Anlage passieren kann.

Somit wird der Stoßkolben 25M in der Mittenposition M gehalten, was wiederum eine Fixierung des Arbeitskolbens 150 in der Neutralposition N bewirkt. Der Arbeitskolben 150 und die damit verbundene Kolbenstange 160 kann sich also lediglich nach rechts bis hin zur Neutralposition N bewegen, wo sie schließlich arretiert wird.

Das gleiche gilt in analoger Weise für die andere Richtung, wie dies anhand der Fig. 2c) dargestellt ist. Dort befindet sich der Arbeitskolben 150 in der rechten Arbeitskammer 14R. Eine Auslenkung weiter nach rechts ist dadurch verhindert, dass der Stoßkolben 25M an die rechte Scheibe 25R anschlägt und von dem Hydraulikdruck in der Kammer 24R abgefangen wird. Es kann lediglich eine Rückführung des Arbeitskolbens 150 zur Neutralposition N hin bewirkt werden, weil der Stoßkolben 25M in diese Richtung frei beweglich ist, bis er an die linke Scheibe 25L anschlägt. Befinden sich schließlich der Stoßkolben 150 in der Mittenposition M und damit der Arbeitskolben 150 in der Neutralposition N, so wird jede weitere Auslenkung blockiert.

Wie insbesondere die Figuren 2 b) und c) verdeutlichen, wird also der Arbeitskolben 150, etwa durch Rückstellkräfte FR, automatisch in die Neutralposition N hinein bewegt und dort schließlich arretiert. Das geschieht immer dann, wenn der Blockierzylinder 240 von dem Rücklauf RL abgetrennt ist. Die Abtrennung erfolgt mittels des in der Figur 1 dargestellten Blockierventils 270 und wird vorzugsweise bei einer höheren Geschwindigkeit, z.B. ab 40 km/h, eingestellt.

Bei geringeren Geschwindigkeiten ist das Blockierventil 270 geöffnet, d.h. es ist eine Strömung des Hydraulikmittels von dem Blockierzylinder 240 in Richtung des Rücklaufes RL und auch zurück möglich. In dieser geöffneten Stellung des Blockierventils kann die im Blockierzylinder 240 befindliche Blockierkolbenanordnung 250 sich weitestgehend frei bewegen, wodurch wiederum der Arbeitskolben 150 nicht in seiner Bewegung behindert wird. Die Hinterachslenkung funktioniert in diesem Falle ohne Einschränkung oder Blockierung.

Besonders hervorzuheben ist dabei, dass die Scheiben immer anliegen, entweder am jeweiligen Stoßkolben oder aber am Mittenanschlag.:

Um nun sicher zu stellen, dass mindestens immer eine der fliegenden Scheiben 25L und/oder 25R an dem Stoßkolben 25M anliegt, wird der Blockierzylinder 240 mit einem Minimaldruck beaufschlagt. Das geschieht dadurch, dass der gesamte Rücklauf RL einen Mindestdruck aufweist, der über ein Rückstellventil 280 (s. Fig. 1) eingestellt wird. Beispielsweise beträgt dieser Mindestdruck 5 bar. Neben den bereits beschriebenen Ventilen sind noch weitere Ventile, insbesondere Sicherheitsventile 181 und 275 vorgesehen, die verhindern, dass sich im Arbeitskreis 100 oder auch in der Blockiereinrichtung 200 ein zu hoher Druck aufbaut. Die von der Pumpe 110 aufgebrachte Leistung erzeugt einen Arbeitsdruck im Vorlauf VL von etwa 180 bar. Die Sicherheitsventile 181 und 275 sind nun so eingestellt, dass sie bei einem Überdruck von 10 bar, d.h. bei einem Gesamtdruck von 190 bar, öffnen. Das erste Sicherheitsventil 181 bewirkt dann eine direkte hydraulische Verbindung zwischen Vorlauf VL und Rücklauf RL; das zweite Sicherheitsventil 275 verbindet in diesem Falle den Blockierzylinder 240 direkt mit dem Rücklauf RL. Durch diese Maßnahmen wird verhindert, dass sich in den Zylindern140 und 240 und in den damit verbundenen Hydraulikleitungen oder -ventilen ein zu hoher Druck aufbauen kann.

Weiterhin ist ein am Arbeitszylinder 140 angeordneter Sensor, hier z.B. ein magnetoresistiver Sensor 170, vorgesehen, der die Stellung des Arbeitskolbens 150 überwacht. Damit kann sicher gestellt werden, dass der Arbeitskolben 150 sich bei Geradeausfahrt in Neutralposition N befindet. Der Sensor 170 wird werksseitig kalibriert, bevor die Anlage in Betrieb genommen wird.

## Patentansprüche

1. Blockiervorrichtung (200) für eine hydraulische Fahrzeug-Hinterachslenkung (RASEC), die einen hydraulischen Arbeitskreis (100) mit einem Steuerventil (130) und mit einem daran angeschlossenen Arbeitszylinder (140) enthält, in dem ein Arbeitskolben (150) verschiebbar aus einer Neutralposition (N) heraus angeordnet ist, deren Verschiebung das Steuerventil (130) steuert, wobei die Blockiervorrichtung (200) die Verschiebung des Arbeitskolbens (150) zumindest zeitweise verhindert,
**dadurch gekennzeichnet, dass**
die Blockiereinrichtung (200) ein mit dem Rücklauf (RL) des Arbeitskreises (100) verbundenes Blockierventil (270) und einen daran angeschlossenen Blockierzylinder (240) enthält, der eine Blockierkolbenanordnung (250) aufnimmt; die über eine mechanische Verbindung (160) zumindest wirkverbunden mit dem Arbeitskolben (150) ist, und dass das Blockierventil (270) schaltbar ist und eine hydraulische Verbindung (HV) zwischen dem Rücklauf (RL) des Arbeitskreises (100) und dem Blockierzylinder (240) in eine Strömungsrichtung so sperrt, dass aus dem Blockierzylinder (240) kein Hydraulikmittel in den Rücklauf (RL) fließen kann, wodurch die Blockierkolbenanordnung (250) auf die Verschiebung des Arbeitskolbens (150) beschränkend einwirkt, so dass der Arbeitskolben (150) nur noch in Richtung zu der Neutralposition (N) hin verschiebbar ist.

2. Blockiervorrichtung (200) nach Anspruch 1, **dadurch gekennzeichnet, dass**
der Arbeitszylinder (140) und der Blockierzylinder (240) in einem Gehäuse angeordnet sind und dass die mechanische Verbindung eine Kolbenstange (160) ist, die auf die Lenkmechanik wirkt und die den Arbeitskolben (150) starr mit der Blockierkolbenanordnung (250) verbindet.

3. Blockiervorrichtung (200) nach Anspruch 1, **dadurch gekennzeichnet, dass** eine Steuerung, insbesondere eine elektrische Steuerung, vorgesehen ist, die das Blockierventil (270) in Abhängigkeit der Fahrzeuggeschwindigkeit so schaltet, dass die hydraulische Verbindung (HV) zwischen dem Rücklauf (RL) des Arbeitskreises (100) und dem Blockierzylinder (240) in beide Strömungsrichtungen geöffnet ist, wenn die Fahrgeschwindigkeit einen vorgebbaren Wert unterschreitet.

4. Blockiervorrichtung (200) nach Anspruch 1, **dadurch gekennzeichnet, dass** die Blockierkolbenanordnung (250) einen mittels der mechanischen Verbindung, insbesondere mittels der Kolbenstange (160), bewegbaren Stoßkolben (25M) und zwei fliegende Scheiben (25L, 25R) enthält, die dichtend an der Innenwand des Blockierzylinders (240) auf jeweils einer der beiden Seiten des Stoßkolbens (25M) anliegen, dass der Blockierzylinder (240) an einer der Neutralposition (N) entsprechenden Mittenposition (M) mindestens einen Anschlag (25A) aufweist, an den die jeweilige fliegende Scheibe (25L, 25R) anschlägt, falls der Stoßkolben (25M) diese Scheibe (25L) nicht von der Mittenposition (M) wegstößt.

5. Blockiervorrichtung (200) nach Anspruch 4, **dadurch gekennzeichnet, dass** der Rücklauf (RL) über ein Rückschlagventil (280) mit einem Reservoir (180) verbunden ist, und dass Rückschlagventil (280) verhindert, dass der Druck im Rücklauf (RL) unter ein Mindestdruck fällt, und dass der Mindestdruck auf die im Blockierzylinder (240) angeordneten fliegenden Scheiben (25L, 25R) wirkt und ausreicht, um jede (25L) der fliegenden Scheiben zur Mittenposition (M) hin zu bewegen, falls der Stoßkolben (25M) die jeweilige Scheibe (25L) nicht von der Mittenposition (M) wegstößt.

6. Blockiervorrichtung (200) nach einem der vorhergehenden Ansprüche, **dadurch gekennzeichnet, dass** das Blockierventil ein über einen Schaltstrom schaltbares Zwei-Wege-Ventil (270) ist, welches im bestromten Zustand in beide Strömungsrichtungen öffnet und im stromlosen Zustand die Strömungsrichtung vom Blockierzylinder (270) zum Rücklauf (RL) sperrt.

7. Blockiervorrichtung (200) nach einem der vorhergehenden Ansprüche, **dadurch gekennzeichnet, dass** eine Hydraulikpumpe (110) vorgesehen ist, die für den Arbeitskreis (100) einen Arbeitsdruck erzeugt, dass ein erstes Sicherheitsventil (181) vorgesehen ist, das eine Verbindung zwischen dem Vorlauf (VL) und dem Rücklauf (RL) des Arbeitskreises (100) herstellt, sobald im Vorlauf (VL) der Arbeitsdruck einen vorgebbaren ersten Druckwert übersteigt, und dass ein zweites Sicherheitsventil (275) vorgesehen ist, das eine Verbindung zwischen dem Blockierzylinder (240) und dem Rücklauf (RL) herstellt, sobald im Blockierkreis (200) der Blockierdruck einen vorgebbaren zweiten Druckwert übersteigt.

8. Fahrzeug-Hinterachslenkung (RASEC), die einen hydraulischen Arbeitskreis (100) mit einem Steuerventil (130) und mit einem daran angeschlossenen Arbeitszylinder (140) enthält, in dem ein Arbeitskolben (150) verschiebbar aus einer Neutralposition (N) heraus angeordnet ist, deren Verschiebung das Steuerventil (130) steuert, und die eine Blockiereinrichtung (200) enthält, welche die Verschiebung des Arbeitskolbens (150) zumindest zeitweise verhindert,
**dadurch gekennzeichnet, dass**
die Blockiereinrichtung (200) ein mit dem Rücklauf (RL) des Arbeitskreises (100) verbundenes Blockierventil (270) und einen daran angeschlossenen Blockierzylinder (240) enthält, der eine Blockierkolbenanordnung (250) aufnimmt, die über eine mechanische Verbindung (160) zumindest wirkverbunden mit dem Arbeitskolben (150) ist, und dass das Blockierventil (270) schaltbar ist und eine hydraulische Verbindung (HV) zwischen dem Rücklauf (RL) des Arbeitskreises (100) und dem Blockierzylinder (240) in eine Strömungsrichtung so sperrt, dass aus dem Blockierzylinder (240) kein Hydraulikmittel in den Rücklauf (RL) fließen kann, wodurch die Blockierkolbenanordnung (250) auf die Verschiebung des Arbeitskolbens (150) beschränkend einwirkt, so dass der Arbeitskolben (150) nur noch in Richtung zu der Neutralposition (N) hin verschiebbar ist.

## Claims

1. Blocking device (200) for a hydraulic vehicle rear axle steering gear (RASEC), which comprises a hydraulic working circuit (100) with a control valve (130) and with a working cylinder (140) connected thereto, in which a working piston (150) is arranged so as to be displaceable from a neutral position (N), displacement of which working piston (150) controls the control valve (130), the blocking device (200) preventing displacement of the working piston (150) at least for a time,
**characterized in that**
the blocking device (200) comprises a blocking valve (270) connected to the return line (RL) of the working circuit (100) and a blocking cylinder (240) connected to said blocking valve (270), which blocking cylinder (240) accommodates a blocking piston arrangement (250), which is at least in operative connection via a mechanical connection (160) with the working piston (150), and **in that** the blocking valve (270) is switchable and blocks a hydraulic connection (HV) between the return line (RL) of the working circuit (100) and the blocking cylinder (240) in a flow direction in such a way that no hydraulic medium can flow out of the blocking cylinder (240) into the return line (RL), whereby the blocking piston arrangement (250) has a limiting effect on displacement of the working piston (150), such that the working piston (150) continues to be displaceable only in the direction of the neutral position (N).

2. Blocking device (200) according to Claim 1, **characterized in that** the working cylinder (140) and the blocking cylinder (240) are arranged in a housing and **in that** the mechanical connection is a piston rod (160), which acts on the steering mechanism and which connects the working piston (150) rigidly to the blocking piston arrangement (250).

3. Blocking device (200) according to Claim 1, **characterized in that** a controller, in particular an electrical controller, is provided, which switches the blocking valve (270) in such a way, as a function of the vehicle speed, that the hydraulic connection (HV) between the return line (RL) of the working circuit (100) and the blocking cylinder (240) is open in both flow directions, if the travelling speed falls below a predeterminable value.

4. Blocking device (200) according to Claim 1, **characterized in that** the blocking piston arrangement (250) comprises a push piston (25M) movable by means of the mechanical connection, in particular by means of the piston rod (160), and two floating discs (25L, 25R), which rest in a sealing manner against the inner wall of the blocking cylinder (240) on in each case one of the two sides of the push piston (25M), **in that** the blocking cylinder (240) comprises at least one limit stop (25A) at a middle position (M) corresponding to the neutral position (N), against which limit stop (25A) the respective floating disc (25L, 25R) strikes if the push piston (25M) does not push this disc (25L) away from the middle position (M).

5. Blocking device (200) according to Claim 4, **characterized in that** the return line (RL) is connected via a nonreturn valve (280) to a reservoir (180), and **in that** nonreturn valve (280) prevents the pressure in the return line (RL) from falling below a minimum pressure, and **in that** the minimum pressure acts on the floating discs (25L, 25R) arranged in the blocking cylinder (240) and is sufficient to move each (25L) of the floating discs towards the middle position (M) if the push piston (25M) does not push the respective disc (25L) away from the middle position (M).

6. Blocking device (200) according to one of the preceding claims, **characterized in that** the blocking valve is a two-way valve (270) switchable via a switching current, which two-way valve (270) opens in both flow directions when current is applied and blocks the flow direction from the blocking cylinder (270) to the return line (RL) when no current is applied.

7. Blocking device (200) according to one of the preceding claims, **characterized in that** a hydraulic pump (110) is provided, which generates a working pressure for the working circuit (100), **in that** a first safety valve (181) is provided, which produces a connection between the feed line (VL) and the return line (RL) of the working circuit (100) as soon as the working pressure exceeds a predeterminable first pressure value in the feed line (VL), and **in that** a second safety valve (275) is provided, which produces a connection between the blocking cylinder (240) and the return line (RL) as soon as the blocking pressure exceeds a predeterminable second pressure value in the blocking circuit (200).

8. Vehicle rear axle steering gear (RASEC), which comprises a hydraulic working circuit (100) with a control valve (130) and with a working cylinder (140) connected thereto, in which a working piston (150) is arranged so as to be displaceable from a neutral position (N), displacement of which working piston (150) controls the control valve (130), and which comprises a blocking device (200) which prevents displacement of the working piston (150) at least for a time,
**characterized in that**
the blocking device (200) comprises a blocking valve (270) connected to the return line (RL) of the working circuit (100) and a blocking cylinder (240) connected to said blocking valve (270), which blocking cylinder (240) accommodates a blocking piston arrangement (250), which is at least in operative connection via a mechanical connection (160) with the working piston (150), and **in that** the blocking valve (270) is switchable and blocks a hydraulic connection (HV) between the return line (RL) of the working circuit (100) and the blocking cylinder (240) in a flow direction in such a way that no hydraulic medium can flow out of the blocking cylinder (240) into the return line (RL), whereby the blocking piston arrangement (250) has a limiting effect on displacement of the working piston (150), such that the working piston (150) continues to be displaceable only in the direction of the neutral position (N).

## Revendications

1. Dispositif de blocage (200) pour une direction hydraulique d'un essieu arrière de véhicule (RASEC), qui comprend un circuit de travail hydraulique (100) avec une vanne de commande (130) et avec un vérin d'entraînement (140) raccordé à celle-ci, dans lequel est disposé un piston de travail (150) pouvant coulisser à partir d'une position neutre (N), dont le déplacement commande la vanne de commande (130), dans lequel le dispositif de blocage (200) empêche au moins temporairement le déplacement du piston de travail (150), **caractérisé en ce que** le dispositif de blocage (200) contient une soupape de blocage (270) raccordée au retour (RL) du circuit de travail (100) et un cylindre de blocage (240) raccordé à celle-ci, qui contient un dispositif de piston de blocage (250), qui est au moins en liaison active avec le piston de travail (150) par l'intermédiaire d'une liaison mécanique (160), et **en ce que** la soupape de blocage (270) est commutable et bloque une liaison hydraulique (HV) entre le retour (RL) du circuit de travail (100) et le cylindre de blocage (240) dans une direction d'écoulement, de telle manière qu'aucun fluide hydraulique ne puisse s'écouler hors du cylindre de blocage (240) dans le retour (RL), le dispositif de piston de blocage (250) ayant ainsi une action de limitation sur le déplacement du piston de travail (150), de telle manière que le piston de travail (150) ne puisse plus coulisser qu'en direction de la position neutre (N).

2. Dispositif de blocage (200) selon la revendication 1, **caractérisé en ce que** le vérin d'entraînement (140) et le cylindre de blocage (240) sont disposés dans un boîtier et **en ce que** la liaison mécanique est une tige de piston (160), qui agit sur le mécanisme de direction et qui relie le piston de travail (150) rigidement au dispositif de piston de blocage (250).

3. Dispositif de blocage (200) selon la revendication 1, **caractérisé en ce qu'**il est prévu une commande, en particulier une commande électrique, qui commute la soupape de blocage (270) en fonction de la vitesse du véhicule, de telle manière que la liaison hydraulique (HV) entre le retour (RL) du circuit de travail (100) et le cylindre de blocage (240) soit ouverte dans les deux directions d'écoulement, lorsque la vitesse du véhicule descend en dessous d'une valeur prédéterminée.

4. Dispositif de blocage (200) selon la revendication 1, **caractérisé en ce que** le dispositif de piston de blocage (250) comporte un piston de contact (25M), mobile au moyen de la liaison mécanique, en particulier au moyen de la tige de piston (160), et deux disques volants (25L, 25R), qui s'appliquent de façon étanche sur la paroi intérieure du cylindre de blocage (240) respectivement sur une des deux faces du piston de contact (25M), et **en ce que** le cylindre de blocage (240) présente, dans une position centrale (M) correspondant à la position neutre (N), au moins une butée (25A) sur laquelle le disque volant respectif (25L, 25R) vient buter dans le cas où le piston de contact (25M) ne repousse pas ce disque (25L) hors de la position centrale (M).

5. Dispositif de blocage (200) selon la revendication 4, **caractérisé en ce que** le retour (RL) est raccordé par un clapet anti-retour (280) à un réservoir (180), **en ce que** le clapet anti-retour (280) empêche que la pression dans le retour (RL) tombe en dessous d'une pression minimale, et **en ce que** la pression minimale agit sur les disques volants (25L, 25R) disposés dans le cylindre de blocage (240) et suffit pour déplacer chacun (25L) des disques volants vers la position centrale (M), au cas où le piston de contact (25M) ne repousse pas le disque respectif (25L) hors de la position centrale (M).

6. Dispositif de blocage (200) selon l'une quelconque des revendications précédentes, **caractérisé en ce que** la soupape de blocage est une soupape à deux voies (270) commutable au moyen d'un courant de commutation, qui à l'état excité s'ouvre dans les deux directions d'écoulement et à l'état non excité bloque la direction d'écoulement du cylindre de blocage (270) vers le retour (RL).

7. Dispositif de blocage (200) selon l'une quelconque des revendications précédentes, **caractérisé en ce qu'**il est prévu une pompe hydraulique (110), qui produit une pression de travail pour le circuit de travail (100), **en ce qu'**il est prévu une première soupape de sécurité (181) qui établit une liaison entre l'arrivée (VL) et le retour (RL) du circuit de travail (100), dès que la pression de travail dans l'arrivée (VL) dépasse une première valeur de pression prédéterminée, et **en ce qu'**il est prévu une deuxième soupape de sécurité (275), qui établit une liaison entre le cylindre de blocage (240) et le retour (RL), dès que la pression de blocage dans le circuit de blocage (200) dépasse une deuxième valeur de pression prédéterminée.

8. Direction d'un essieu arrière d'un véhicule (RASEC), qui comprend un circuit de travail hydraulique (100) avec une vanne de commande (130) et un vérin d'entraînement (140) raccordé à celle-ci, dans lequel est disposé un piston de travail (150) pouvant coulisser à partir d'une position neutre (N), dont le déplacement commande la vanne de commande (130), et qui contient un dispositif de blocage (200) qui empêche au moins temporairement le déplacement du piston de travail (150), **caractérisé en ce que** le dispositif de blocage (200) contient une soupape de blocage (270) raccordée au retour (RL) du circuit de travail (100) et un cylindre de blocage (240) raccordé à celle-ci, qui contient un dispositif de piston de blocage (250), qui est au moins en liaison active avec le piston de travail (150) par l'intermédiaire d'une liaison mécanique (160), et **en ce que** la soupape de blocage (270) est commutable et bloque une liaison hydraulique (HV) entre le retour (RL) du circuit de travail (100) et le cylindre de blocage (240) dans une direction d'écoulement, de telle manière qu'aucun fluide hydraulique ne puisse s'écouler hors du cylindre de blocage (240) dans le retour (RL), le dispositif de piston de blocage (250) ayant ainsi une action de limitation sur le déplacement du piston de travail (150), de telle manière que le piston de travail (150) ne puisse plus coulisser qu'en direction de la position neutre (N).
